(19) Europäisches Patentamt / European Patent Office / Office européen des brevets

(11) **EP 2 090 828 A2**

(12) **EUROPÄISCHE PATENTANMELDUNG**

(43) Veröffentlichungstag:
**19.08.2009 Patentblatt 2009/34**

(51) Int Cl.:
*F23J 15/02* *(2006.01)*

(21) Anmeldenummer: **09152688.9**

(22) Anmeldetag: **12.02.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **13.02.2008 DE 102008009004**

(71) Anmelder: **Karpf, Rudi**
**35423 Lich (DE)**

(72) Erfinder: **Die Erfindernennung liegt noch nicht vor**

(74) Vertreter: **Tappe, Hartmut**
**advotec.**
**Patent- und Rechtsanwälte**
**Georg-Schlosser-Strasse 6**
**35390 Giessen (DE)**

(54) **Kleinfeuerungsanlage mit reduzierter Feinstaubemission**

(57) Die Erfindung betrifft eine Kleinfeuerungsanlage für biogene Festbrennstoffe mit einer Zuführvorrichtung für die Festbrennstoffe, einem Kessel enthaltend eine Verbrennungskammer und Wärmetauscher, einem Saugzug und einem Kamin, wobei ein zwischen dem Kessel und dem Saugzug oder dem Kamin als filternder Abscheider ein Feinstaubfilter mit erneuerbarem profiliertem Filtermedium zur Abscheidung von Grob-, Fein- und/oder Feinststaub vorgesehen ist.

Fig. 1

EP 2 090 828 A2

## Beschreibung

Die Erfindung betrifft eine Kleinfeuerungsanlage für biogene Feststoffe, die die Feinstaubemission mit Hilfe eines Filtersystems zur Abscheidung von Grob-, Fein- und/oder Feinststaub reduziert.

Die Anforderungen an kleine und mittlere Feuerungsanlagen für den Einsatz von biogenen Festbrennstoffen und die Minderung der damit verbundenen Schadstoffemissionen werden durch die 1. BImSchV geregelt.

Nach Angaben des Umweltbundesamtes (UBA) steigen die Feinstaubemissionen aus Kleinfeuerungsanlagen für Holzbrennstoffe weiter an, da die Anzahl der Holzfeuerungsanlagen zunimmt und der Feinstaubanteil am gesamten Staubausstoß hierbei besonders hoch ist (vgl. Tab. 1).

Tab. 1: Typische Messwertergebnisse für die Korngrößenverteilung bei Stäuben aus häuslichen Zentralheizungsanlagen mit Hackschnitzel- und Pelletsfeuerung (Fachagentur Nachwachsende Rohstoffe (FNR) e.V. [Hrsg.], Handbuch Bioenergie-Kleinanlagen, 2. vollständig überarb. Aufl. 2007; FNR e.V.; Gülzow, S. 126)

| | | Hackschnitzelkessel | Pelletkessel |
|---|---|---|---|
| Nennwärmeleistung | | ca. 40 kW | ca. 25 kW |
| Gesamtstaubemission | | ca. 40 mg/Norm-m$^3$ | ca. 25 mg/Norm-m$^3$ |
| Korngrößenverteilung | < 1 $\mu$m | 83 % | 93 % |
| | 1-2,5 $\mu$m | 4 % | 3 % |
| | 2,5-10 $\mu$m | 5 % | 2 % |
| | > 10 $\mu$m | 8 % | 2 % |

Im Rahmen der Novellierung der 1. BImSchV werden künftig auch Brennstoffe wie Getreidekörner oder Getreideganzpflanzen etc. (§ 3 Abs.1 Nr.8) für den Einsatz in Feuerungsanlagen zugelassen, deren Verbrennung aber auch mit höheren brennstoffspezifischen Schadstoffemissionen verbunden ist. Dies betrifft insbesondere den Anteil des Gesamtstaubes und der Stickoxide $NO_x$.

Deshalb sieht der Gesetzgeber eine Begrenzung der betreffenden Schadstoffemissionswerte vor. Wegen der aufwendigen Emissionsmessung genügt hinsichtlich der Stickoxide $NO_x$ der Nachweis durch den Hersteller für die Einhaltung der Emissionsgrenzwerte nach den Anforderungen bei der Typprüfung.

Die geplanten Anforderungen durch die novellierte 1. BImSchV gelten künftig bereits für kleine und mittlere Feuerungsanlagen ab einer Nennwärmeleistung von 4 kW. Die Festlegung der Emissionsgrenzwerte für die Feuerungsanlagen erfolgt hierbei in Abhängigkeit vom eingesetzten Brennstoff (nach § 3) und der Nennwärmeleistung. Diese Emissionsgrenzwerte sind gegenüber der noch geltenden Fassung der BImSchV deutlich reduziert und insbesondere die Grenzwerte für Anlagen, die nach dem 31.12.2014 errichtet werden, sind nicht mehr allein aufgrund von Primärmaßnahmen einzuhalten.

Bei der Verbrennung von biogenen Festbrennstoffen fallen drei verschieden Fraktionen von Asche an (Folke Wolff, Biomasse in Baden-Württemberg - ein Beitrag zur wirtschaftlichen Nutzung der Ressource Holz als Energieträger; Dissertation, Fakultät für Wirtschaftswissenschaften, Universität Karlsruhe (TH), 2004, S.48):

1. Die Grob- oder Rostasche bleibt als fester Rückstand im Brennraum zurück und besteht vorwiegend aus mineralischen Rückständen und den mit dem Brennstoff eingetragenen Verunreinigungen wie Sand, Steine oder Metallteile.

2. Die Flugasche besteht ebenfalls vorwiegend aus anorganischen Partikeln, die jedoch so klein sind, dass sie mit dem Rauchgas zu den Wärmetauschern (Verunreinigungen der Wärmetauscherrohre, die regelmäßig beseitigt werden müssen) und bis zu den Partikelabscheidern getragen werden.

3. Die Feinstflugasche kann von Zyklonen nicht vollständig abgeschieden werden. Emissionen dieser Partikelfraktion im Rauchgas können nur durch Gewebe- oder Elektrofilter gemindert werden.

Die Menge der anfallenden Holzasche hängt außer von der Qualität des Ausbrandes auch von den eingesetzten Brennstoffen ab, deren Beschaffenheit zusätzlich die Aufteilung des Ascheanfalls auf die verschiedenen Aschefraktionen beeinflusst (vgl. Tab. 2).

Tab. 2: Anteile der Aschefraktionen in [Gew.-%] des gesamten Ascheanfalls (Folke Wolff , Biomasse in Baden-Württemberg - ein Beitrag zur wirtschaftlichen Nutzung der Ressource Holz als Energieträger; Dissertation, Fakultät für Wirtschaftswissenschaften, Universität Karlsruhe (TH), 2004, S.49)

| Aschefraktion | Rindenfeuerung | Hackschnitzelfeuerung | Spänefeuerung |
|---|---|---|---|
| Grobasche | 75-85 | 70-90 | 20-30 |
| Flugasche | 15-25 | 10-30 | 55-65 |
| Feinstflugasche | 1-4 | 3-6 | 10-15 |

Da der überwiegende Anteil der Gesamtstaubemissionen von Hackschnitzel- und Pelletfeuerungen aus Feinstaubpartikeln < 10 µm besteht (vgl. Tab. 1), werden an die Staubabscheidung höchste Anforderungen gestellt. Berücksichtigt man die Abscheideleistungen der verschiedenen Staubabscheidesysteme, dann können diese hohen Anforderungen nur noch durch (Nass-)Elektrofilter oder Gewebefilter (filternde Abscheider) zufriedenstellend erfüllt werden.

Allerdings stößt man bei der Filtertechnik im Bereich der kleinen und mittleren Feuerungsanlagen an die untere Leistungsgrenze in Bezug auf die Rauchgasmenge und die damit verbundenen Baugrößen der Filter.

Dieser Leistungsbereich ist eher typisch für die Lüftungs- und Klimatechnik. In der Lüftungs- und Klimatechnik können mit der Filtertechnik selbst kleinste Staubpartikel bis zu 0,01 µm abgeschieden werden. Als Filtermaterialien werden hier für die Feinststaubabscheidung so genannte Hochleistungsfilter bzw. Schwebstofffilter z.B. aus Cellulose- oder Glasfaserpapier eingesetzt (Filterklassen H10 bis H17 nach EN 1822). Diese sind jedoch in der Regel nicht für den Einsatz in Holzfeuerungsanlagen geeignet.

In der Kraftwerkstechnik werden bei der Rauchgasreinigung für die Abscheidung von Staub und Flugasche Filtermaterialien eingesetzt, die sowohl mechanisch als auch thermisch beansprucht werden. Die dabei bevorzugte pneumatische Abreinigung der Filterflächen ist jedoch für Holzfeuerungsanlagen zu aufwendig.

Für einen Einsatz in Holzfeuerungsanlagen werden an die Filtermaterialien folgende Anforderungen gestellt:

1. Beim Anfahren der Feuerungsanlage entstehen infolge der niedrigen Feuerraumtemperatur teerhaltige Zersetzungsprodukte, die sich als klebriges Kondensat auf der Filteroberfläche absetzen. Diese Produkte setzen die Filter zu und sollten daher vorher entfernt werden oder die Filter hiervor geschützt werden.

2. Infolge der begrenzten Querschnittsfläche des Rauchgaskanals und der vorgegebenen Filterflächenbelastung muss eine ausreichende Filteroberfläche vorhanden sein.

3. Aufgrund der begrenzten Querschnittsfläche des Rauchgaskanals ist die Strömungsgeschwindigkeit des Rauchgases entsprechend hoch, so dass die mechanische Belastung und die damit verbundene Verformung der Filteroberfläche reduziert werden sollte.

4. Bei feinkörnigen Brennstoffen (z.B. Späne) kann es zu einem Austrag von unvollständig verbrannten, noch glühenden Brennstoffpartikeln kommen (Funkenflug), deren Ausbrand erst auf der Filteroberfläche erfolgt.

5. Die beladene Filterfläche kann nicht durch eine pneumatische online-Abreinigung im Rauchgasstrom erneuert werden.

Aufgabe der vorliegenden Erfindung ist es daher, die Nachteile des Standes der Technik zu überwinden und eine technisch und wirtschaftlich vorteilhafte Kleinfeuerungsanlage zur Verfügung zu stellen, die eine reduzierte Feinstaubemission aufweist. Insbesondere soll eine Kleinfeuerungsanlage bereitgestellt werden, die die geplanten Anforderungen durch die kommende Novellierung der 1. BImSchV erfüllt.

Diese Aufgabe wird erfindungsgemäß durch die kennzeichnenden Merkmale des Hauptanspruchs gelöst. Spezielle Anlagenmerkmale sind in den Unteransprüchen beschrieben.

Gegenstand der vorliegenden Erfindung ist daher eine Kleinfeuerungsanlage für biogene Festbrennstoffe mit einer Zuführvorrichtung für die Festbrennstoffe, einem Kessel, einem Saugzug und einem Kamin, bei der zwischen dem Kessel und dem Saugzug oder dem Kamin ein filternder Abscheider zur Abscheidung von Grob-, Fein- und/oder Feinststaub vorgesehen ist. Als filternder Abscheider kommt dabei ein Feinstaubfilter mit erneuerbarem profilierten Filtermedium zur Verwendung. Der Kessel enthält standardmäßig in der Regel eine Verbrennungskammer und Wärmetauscher.

Unter biogenen Festbrennstoffen versteht der Fachmann solche, die "biologischen oder organischen Ursprungs" sind, d.h. die nicht durch chemische Synthese gewonnen werden. Dabei werden die biogenen Brennstoffe dem eigentlich ebenfalls biogenen fossilen Energieträger Mineralöl als nachwachsende, umweltschonende Alternative gegenübergestellt.

Ohne Einschränkung der Allgemeinheit sind Bespiele für erfindungsgemäße biogene Festbrennstoffe naturbelassenes, stückiges Holz, Holzhackschnitzel, Holzspäne, Presslinge aus naturbelassenem Holz, Holzpellets, gestrichenes, lackiertes oder beschichtetes Holz, Sperrholz, Holzspanplatten, verleimtes Holz, Stroh, Getreideganzpflanzen, Getreidekörner, Pellets aus Getreidekörnern oder Getreideganzpflanzen, Getreideausputz, Getreidespelzen, Getreidehalmreste.

Es war überraschend und für den Fachmann in keiner Weise vorhersehbar, dass die Reduzierung der Feinstaubemission kostengünstig in Kleinfeuerungsanlagen für biogene Festbrennstoffe durch den Einsatz der passenden Filtertechnik in Kombination mit der passenden Gestaltung der Filteroberfläche vorgenommen werden kann.

Vorteilhafterweise werden damit die hohen Anforderungen an die Abscheideleistungen und die Filtermaterialien, die der Einsatz der Filtertechnik in Holzfeuerungsanlagen stellt, durch eine Filtertechnik erfüllt, die die Leichtbauweise der Lüftungs- und Klimatechnik mit den hochwertigen Filtermaterialien aus der Rauchgasreinigung kombiniert.

Die beladene Filterfläche wird erfindungsgemäß nicht durch eine pneumatische Abreinigung im Rauchgasstrom erneuert, da diese für Holzfeuerungsanlagen zu aufwändig ist, sondern durch eine unbeladene Filterfläche ersetzt oder mechanisch gereinigt. Vorzugsweise erfolgt der Austausch der Filterfläche mechanisch.

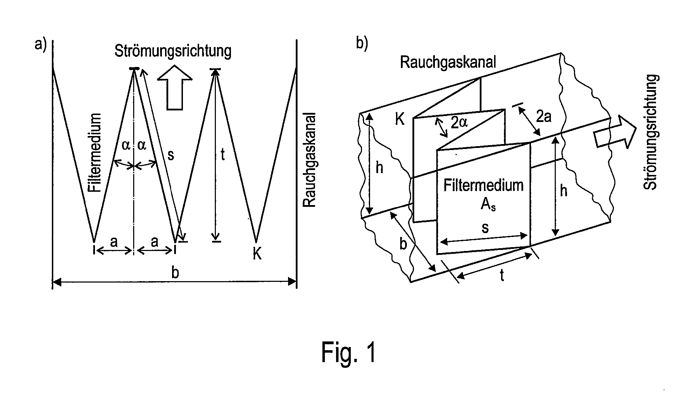

Durch die erfindungsgemäße Profilierung des Filtermediums wird die Filteroberfläche bei einer vorgegebenen, begrenzten Querschnittsfläche des Rauchgaskanals erhöht. In einer bevorzugten Ausführungsform ist das profilierte Filtermedium dabei ziehharmonikaartig gefaltet (vgl. beispielsweise Fig. 1).

Besonders bevorzugt kann das Filtermedium aus einem hochwertigen Filtermaterial mit Drahtstäben als Einlagen zur Stabilisierung der freien Faltkanten bestehen. Die freien Faltkanten können dabei zusätzlich über stabile Fäden miteinander verbunden sein, die an den oberen und unteren Enden der Drahtstäbe angebracht sind.

Bei den in der Lüftungs- und Klimatechnik üblichen Gewebefiltern handelt es sich in der Regel um stationäre Filter, d.h. das Filtermedium ist auf eine gasdurchlässige Stützauflage (z.B. Stützkorb aus Draht bei Schlauchfiltern) gespannt, die ein Kollabieren der Filterform durch die Rauchgasströmung verhindern soll. Hierdurch werden die Übergänge zwischen Roh- und Reingasseite klar definiert, so dass die Abdichtung der Grenzflächen kein Problem darstellt.

Der erfindungsgemäße Feinstaubfilter mit erneuerbarer profilierter Filterfläche für Kleinfeuerungsanlagen erfüllt viel höhere Anforderungen an seine Abdichtung:

- Die Dichtung ist lösbar, um dass Filtermedium beim Eintritt in den Rauchgaskanal einzuspannen und beim Austritt wieder abzulösen.

- Die Dichtung ist beweglich, damit die Abdichtung während des Transportvorgangs gewährleistet ist.

- Die Spannvorrichtung des Dichtleistensystems nimmt die mechanische Belastung des Filtermediums durch die Rauchgasströmung auf, da keine Stützauflage existiert, die mit dem Filtermedium bei einem Transportvorgang mitgeführt werden kann.

- Die Dichtung besitzt an der Ein- und Austrittsöffnung des Rauchgaskanals eine Schleusenvorrichtung, die die Abdichtung während der Filtrationsphase und des Transportvorgangs gewährleistet. Das Filtermedium kann zusätzlich Einlagen aus Drahtstäben zur Stabilisierung der freien Faltkanten enthalten.

- Das beladene Filtermedium kann vor einer erneuten Lagerung in gefaltetem Zustand durch eine mechanische Reinigungsvorrichtung abgereinigt werden.

Während des Anfahrvorgangs entstehen unter anderem auch klebrige Kondensate aus teerhaltigen Zersetzungsprodukten. Das hochwertige Filtermedium sollte durch geeignete Maßnahmen oder eine spezielle Vorrichtung vor diesen geschützt werden.

Daher ist in einer weiteren bevorzugten Ausführungsform vor dem Feinstaubfilter mit erneuerbarem profiliertem Filtermedium ein Vorfilter vorgesehen. Alternativ oder zusätzlich werden abgeschiedene Flugasche und/oder abgeschiedene Staubpartikel in den Rauchgasstrom vor den Feinstaubfilter mit erneuerbarem profiliertem Filtermedium zurückgeführt. Auch diese Flugasche und/oder diese Staubpartikel dienen dazu, die im Rauchgas vorhandenen Schadstoffe aufzunehmen und/oder abzuscheiden, d.h. in erster Linie werden die teerhaltigen Zersetzungsprodukte vor der Beaufschlagung auf dem Feinstaubfilter abgefangen.

Der Anfahrvorgang beginnt mit der Zündung des Brennstoffes und dauert bis zu der stabilen Flammenbildung mit ausreichend hoher Feuerraumtemperatur ca. 10 min. Es ist daher zweckmäßig, das hochwertige Filtermedium nur während des begrenzten Zeitraumes des Anfahrvorgangs durch den vorgeschalteten Filter von geringerer Qualität zu schützen.

Besonders bevorzugt daher wird der Schutzfilter bzw. die rückgeführte Flugasche und/oder Staubpartikel nur bei Bedarf (d.h. während des Anfahrvorgangs) manuell, beispielsweise über eine mechanische Vorrichtung mit elektrischem Kettenantrieb, zugeschaltet, d.h. in den Rauchgaskanal ein- und ausgebracht. Hierbei kann das Vorfilter zum Beispiel von einer Position unterhalb des Rauchgaskanals über Führungsschienen und Umlenkrollen in den Rauchgaskanal gespannt werden, bis der Kanalquerschnitt vollständig bedeckt ist. Nach Ablauf des Anfahrvorgangs kann das Vorfilter dann über den Kettenantrieb wieder aus dem Rauchgaskanal gefördert werden und kann vor seiner Wiederverwendung in einer Reinigungsvorrichtung unterhalb des Rauchgaskanals abgereinigt werden.

Ohne Einschränkung der Allgemeinheit kann als derartiges Vorfilter beispielsweise ein Rollbandfilter verwendet werden.

Für das erfindungsgemäß verwendete Vorfilter wird dementsprechend ein Filtermaterial verwendet werden, das der Beanspruchung durch die Zugkräfte bei dem Transportvorgang standhält. Mit den erfindungsgemäß bevorzugten Rollbandfiltern können insbesondere grobe Staubpartikel abgeschieden werden. Daher werden diese Filtersystem oft auch als Vorfilter eingesetzt. Bevorzugte Filterklassen sind die Klassen G3 bis F5 nach EN 779.

In einer erfindungsgemäß besonders bevorzugten Ausführungsform werden vor dem Feinstaubfilter mit erneuerbarem profiliertem Filtermedium zusätzliche Additive zur Schadstoffaufnahme und/oder Schadstoffabscheidung ihn den Rachgaskanal eingeblasen.

Allgemein werden für die Abscheidung von Staub und Flugasche in den Filtersystemen der erfindungsgemäßen Kleinfeuerungsanlagen Filtermaterialien eingesetzt, die sowohl mechanisch als auch thermisch beansprucht werden. Dem Fachmann sind derartige Filtermaterialien insbesondere aus der Abgasreinigung bekannt. Als Filtermaterialien für die Feinststaubabscheidung werden bevorzugt sogenannte Hochleistungsfilter bzw. Schwebstofffilter z.B. aus Celluloseoder Glasfaserpapier eingesetzt (Filterklassen H10 bis H17).

Ohne Einschränkung der Allgemeinheit ist das Filtermedium des Rollband- und/oder des Umlauffilters der erfindungsgemäßen Kleinfeuerungsanlage bevorzugt ausgewählt aus Polypropylen (PP), Polyester (PET), Polyacrylnitril (PAN), Meta-Aramid (MPD-I), Polyphenylensulfid (PPS), Polyimid (PI), Polytetrafluorethylen (PTFE), Polyvinylidenfluorid (PVDF) und Polyamid (aliphatisch, PA). Besonders bevorzugt ist es, wenn das Filtermedium des Rollband- und/oder des Umlauffilters mit PTFE beschichtet ist oder aus PTFE besteht.

Die Abreinigung des Filtermediums, insbesondere des Feinstaubfilters mit erneuerbarem profiliertem Filtermedium, erfolgt bevorzugt mechanisch. Ohne Einschränkung der Allgemeinheit sind hier die Schwerkraft, ein Abstreifer, Bürsten, eine Klopfvorrichtung usw. zu nennen.

Bei dem Rollbandfilter kann gegebenenfalls auf eine Abreinigung verzichtet werden, da das Filtermaterial nach Verbrauch komplett ausgetauscht wird.

Als Alternative für einen Filterbetrieb mit Abreinigung des wiederverwendbaren Filtermediums vor Ort könnte ein Filterbetrieb mit Recycling der gebrauchten Filtermedien angeboten werden. Die Filtermedien werden hierbei z.B. im Rahmen eines Pfandsystems ausgetauscht und regeneriert.

Besonders bevorzugt erfolgt die Abreinigung des Feinstaubfilters bei hohen Temperaturen, d.h. bevorzugt bei Temperaturen größer als 180 °C, ganz besonders bevorzugt bei Temperaturen zwischen 180 und 260 °C.

Die Feuerraumtemperaturen sind bei biogenen Festbrennstoffen im Vergleich zur Kohleverbrennung relativ niedrig. Hierdurch verschlechtert sich der Ausbrand der Rauchgase, was zu höheren CO-Konzentrationen im Rauchgas führt. Dafür ist die Bildung von thermischem $NO_x$ vernachlässigbar, sodass die $NO_x$-Emissionen fast ausschließlich durch den Brennstoff-Stickstoff verursacht werden.

Aufgrund des hohen Anteils an den emissionsrelevanten Brennstoffkomponenten N und Cl ist insbesondere bei der Verbrennung von biogenen Festbrennstoffen wie zum Beispiel Getreidekörner oder Getreideganzpflanzen (vgl. § 3 Abs,1 Nr.8 der Novelle der 1. BImSchV) mit erhöhten Schadstoffemissionen in Bezug auf $NO_x$ (Stickoxide) und PCDD/PCDF (polychlorierte Dibenzo-Dioxine und -Furane) zu rechnen.

Eine Reduzierung der CO- und $NO_x$-Emissionen kann durch Primärmaßnahmen wie eine gestufte Luftzufuhr und/oder eine Abgasrückführung (Rauchgasrezirkulation) erreicht werden.

Daher kann optional bei der erfindungsgemäßen Kleinfeuerungsanlage auch eine Rauchgasrezirkulation erfolgen, die die CO- und $NO_x$-Emissionen reduziert. Hierdurch kann zusätzlich das Filtermedium mit Reingas gespült werden, das durch ein Gebläse wieder in den Feuerraum des Kessels rückgeführt wird. Hierdurch kann eine maximale Abscheideleistung erzielt werden.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

In **Fig. 1** ist die Filterflächenprofilierung mit Kennzeichnung der geometrischen Parameter dargestellt. Fig. 1a) zeigt dabei die Draufsicht, Fig. 1b) eine perspektivische Ansicht des gefalteten Filtermediums im Rauchgaskanal. Dabei ist a der Abstand und $\alpha$ der Halbwinkel zwischen den freien Faltkanten K, $A_s$ die Fläche und s die Kantenlänge einer gefalteten Filterseite, b die Breite und h die Höhe des Rauchgaskanals sowie t die verfügbare Einbautiefe des Filtermediums.

Die Gesamtfilterfläche $A_F$ errechnet sich aus dem Produkt von Anzahl $n_s$ und Fläche $A_s$ der gefalteten Filterseiten. Die Gesamtlänge 1 des Filters ergibt sich aus der Anzahl $n_s$ und der Kantenlänge s der gefalteten Filterseiten. Die Anzahl $n_K$ der freien Faltkanten K entspricht der um 1 reduzierten Anzahl $n_s$ der gefalteten Filterseiten:

$$(1) \quad A_F = n_s \cdot A_s = h \cdot l = h \cdot n_s \cdot s$$

$$(2) \quad a = \frac{b}{n_s}$$

$$(3) \quad s = \frac{l}{n_s} = \sqrt{a^2 + t^2} = \frac{a}{\sin\alpha} = \frac{t}{\cos\alpha}$$

$$(4) \quad l = \frac{A_F}{h} = n_s \cdot \sqrt{\frac{b^2}{n_s^2} + t^2}$$

$$(5) \quad n_s = \sqrt{\left(\frac{A_F^2}{h^2} - b^2\right) \cdot \frac{1}{t^2}} = n_K + 1$$

$$(6) \quad \alpha = \arcsin\left(\frac{a}{s}\right) = \arccos\left(\frac{t}{s}\right) = \arctan\left(\frac{a}{t}\right)$$

$$(7) \quad t = \sqrt{s^2 - a^2}$$

Die erforderliche Gesamtfilterfläche $A_F$ errechnet sich aus dem vorhandenen Betriebsvolumenstrom des feuchten Rauchgases (abhängig von der Kesselleistung) und der spezifischen Filterflächenbelastung $v_F$ (abhängig von den Stoffeigenschaften und den Abscheidebedingungen). In der VDI-Richtlinie 3677 wird für die spezifische Filterflächenbelastung bei Asche ein Wert von $v_F = 70$ bis $90$ $m^3/(m^2 \cdot h)$ angegeben. In der Praxis werden auch Werte bis $v_F = 100$ $m^3/(m^2 \cdot h)$ erreicht.

$$(8) \quad A_F = \frac{\dot{V}_{RG,f.,i.B.}}{v_F}$$

Für die Auslegung des Feinstaubfilters sollten folgende Rahmenbedingungen beachtet werden:

- Der Abstand a zwischen den freien Faltkanten K wird aus fertigungstechnischen Gründen auf eine geringe Auswahl an vorgegebenen Werten begrenzt.

- Die Querschnittsgeometrie des Rauchgaskanals, d.h. Breite x Höhe = b x h, wird in Abhängigkeit von der Kesselleistung und der damit verbundenen Abgasmenge für bestimmte Leistungsbereiche festgelegt (normative Regelung möglich).

- Die verfügbare Einbautiefe t des Filtermediums ist von den in Punkt 1 und 2 genannten vorgegebenen Parametern unabhängig und kann daher als Variable für die Feinstaubfilterauslegung verwendet werden.

Mit den vorgegebenen Werten (Rahmenbedingungen) und den Gleichungen (1) bis (8) lassen sich sämtliche geometrischen Parameter berechnen, die für die Feinstaubfilterauslegung erforderlich sind.

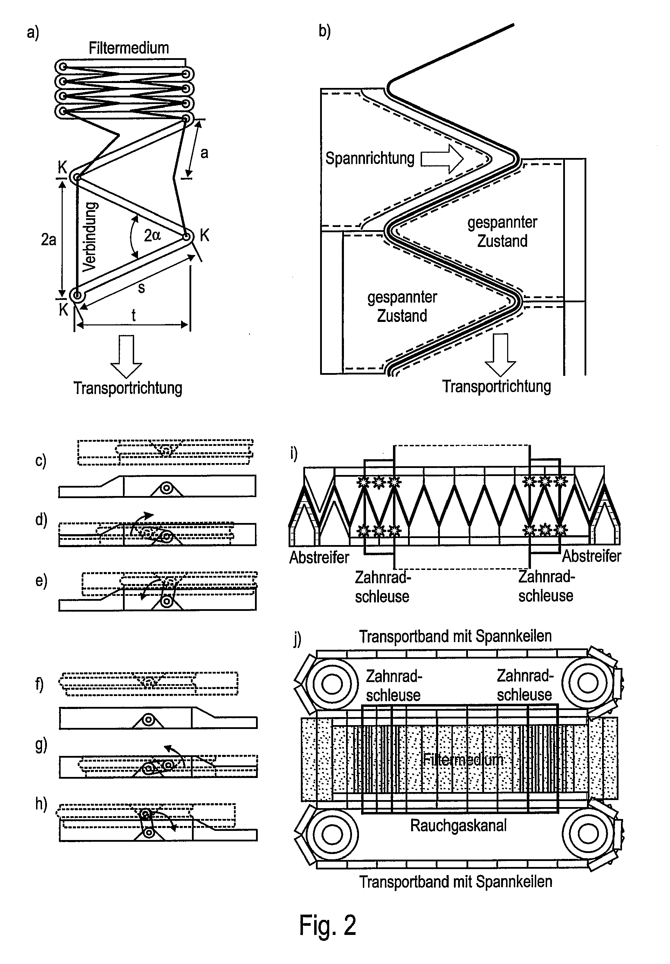

In **Fig. 2** ist ein mögliches Dichtungssystem für den erfindungsgemäßen Feinstaubfilter mit erneuerbarem profiliertem Filtermedium zu sehen.

Das Filtermedium besteht aus einem hochwertigen Filtermaterial mit Drahtstäben als Einlagen zur Stabilisierung der freien Faltkanten. Die freien Faltkanten sind über stabile Fäden miteinander verbunden, die an den oberen und unteren Enden der Drahtstäbe angebracht sind. Bei der Entfaltung des Filtermediums (während des Transportvorgangs) strecken sich die Verbindungen in Transportrichtung bis zum Abstand 2a und ziehen dann die nächste Filterseite aus dem Depot (siehe Fig. 2a).

Die Abdichtung zwischen Roh- und Reingasseite erfolgt mit Hilfe von Spannkeilen, die auf zwei Transportbändern wechselseitig angebracht sind und in die Zwischenräume der Falten gedrückt werden (siehe Fig. 2b). Die Spannkeile sind aus einem Formstück und einem Dichtungsstück zusammengesetzt (siehe Fig. 2c und f).

Das über ein Gelenk mit dem Formstück verbundene Dichtungsstück ist an seiner Dichtungsfläche profiliert. Hierbei gibt es zwei verschiedene Profile, die ineinander greifen und so die Dichtwirkung verstärken (siehe Fig. 2c-h). Im gespannten Zustand werden die Dichtungsstücke der gegenüberliegenden Spannkeile gegen das Filtermedium gepresst (siehe Fig. 2b).

Das Filtermedium wird durch zwei Transportbänder am Boden und an der Decke des Rauchgaskanals fest eingespannt und transportiert. Hierbei muss die Laufrichtung und die Geschwindigkeit der Transportbänder während des Transportvorgangs genau synchronisiert werden, um einen Verzug des Filtermediums zu vermeiden (siehe Fig. 2j). Die Abdichtung der Transportbänder erfolgt im Rauchgaskanal durch entsprechende Dichtungsleisten.

Die Ein- und Austrittsöffnungen an den Seiten des Rauchgaskanals werden mit Hilfe von Zahnradschleusen abgedichtet. In den Zahnradschleusen trifft das Filtermedium in gespanntem Zustand mit seinen freien Faltkanten auf drehbare Dichtungsstäbe mit Zahnrad-Profil. Während des Transportvorgangs liegen die Zahnrad-Flanken an den Seiten des Filtermediums an und gewährleisten so die Abdichtung des Rauchgaskanals. Die Anzahl, Abstände und Positionen der Dichtungsstäbe mit Zahnrad-Profil werden so gewählt, dass die Dichtungsstäbe pro Schleusenseite zu jedem Zeitpunkt einen Kontakt mit mindestens zwei Filterseiten bzw. drei aufeinanderfolgenden freien Filterkanten aufweisen und so eine Schleusenfunktion bewirken.

Nach Schleusenaustritt wird das Filtermedium durch einen Abstreifer mechanisch abgereinigt und für die erneute Lagerung im Depot gefaltet.

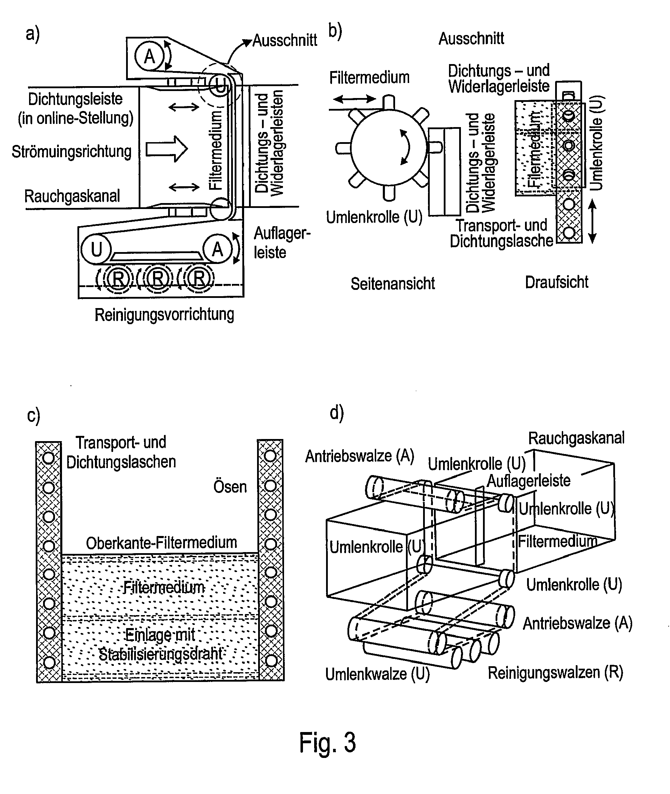

In **Fig. 3** sind Ansichten einer möglichen konstruktiven Gestaltung des vorgeschalteten Schutzfilters abgebildet.

An der Stelle der Filterebene besitzt der Rauchgaskanal einen durchgehenden Spalt für die Aufnahme des Filtermediums des Vorfilters, das über die Antriebswalzen und Umlenkungsrollen in den freien Querschnitt des geteilten Rauchgaskanals gespannt wird (siehe Fig. 3a und d).

Das Filtermedium besteht aus einem Filtermaterial geringerer Qualität mit zwei seitlich angebrachten Transportlaschen, die auch als Dichtungslaschen fungieren (siehe Fig. 3b und c), und enthält zusätzliche Einlagen mit Stabilisierungsdrähten, die zusammen mit der Auflageleiste im Rauchgaskanal eine Durchbiegung des Filtermediums verhindern sollen (siehe Fig. 3a und d).

Die Transportlaschen besitzen Metallösen, damit das Filtermedium bei dem Transportvorgang besser von den Antriebswalzen und Umlenkrollen geführt werden kann. Hierbei greifen die Zapfen der Antriebswalzen bzw. Umlenkrollen in die Löcher der Metallösen an den Transportlaschen und bewegen diese zusammen mit dem Filtermedium in die entsprechende Transportrichtung. Gleichzeitig werden die Transportlaschen von den Umlenkrollen an die Dichtungs- und Widerlagerleisten gedrückt, die an den Außenseiten des Rauchgaskanals angebracht sind.

Während des Anfahrvorgangs verharrt die umlaufende Dichtungsleiste im Rauchgaskanal in der online-Stellung, d.h. der durchgehende Spalt im Rauchgaskanal für das Filtermedium wird nicht von der umlaufenden Dichtungsleiste verdeckt (siehe Fig. 3a).

Nach Beendigung des Anfahrvorgangs wird das Filtermedium über die Antriebswalzen und Umlenkrollen in seine Ausgangsposition zurückgefahren, bis die Oberkante des Filtermediums aus dem Bereich des Rauchgaskanalquerschnittes austritt. Dann wird die umlaufende Dichtungsleiste in die offline-Stellung bewegt, damit der nun freiliegende durchgehende Spalt im Rauchgaskanal bedeckt wird, um so den Rauchgaskanal ausreichend abzudichten.

Während des Transportvorgangs wird die mit teerhaltigen Kondensaten verklebte Seite des Filtermediums in der Reinigungsvorrichtung unterhalb des Rauchgaskanals an den Reinigungswalzen vorbeigeführt. Dabei wird die Schmutzschicht mechanisch mit oder ohne Hilfe von Reinigungsmitteln von der Oberfläche des Filtermediums entfernt, bevor das Filtermedium in die Ausgangsposition gefahren wird und so für den nächsten Anfahrvorgang bereit steht.

Sämtliche Komponenten des vorgeschalteten Schutzfilters (inklusive Reinigungsvorrichtung) sind in einer Blechkonstruktion eingekapselt, die an dem Rauchgaskanal gasdicht befestigt ist.

**Patentansprüche**

1. Kleinfeuerungsanlage für biogene Festbrennstoffe mit einer Zuführvorrichtung für die Festbrennstoffe, einem Kessel enthaltend eine Verbrennungskammer und Wärmetauscher, einem Saugzug und einem Kamin,
   **dadurch gekennzeichnet,**
   **dass** zwischen dem Kessel und dem Saugzug oder dem Kamin als filternder Abscheider ein Feinstaubfilter mit erneuerbarem profiliertem Filtermedium zur Abscheidung von Grob-, Fein- und/oder Feinststaub vorgesehen ist.

2. Kleinfeuerungsanlage nach Anspruch 1,
   **dadurch gekennzeichnet,**
   **dass** das profilierte Filtermedium ziehharmonikaartig gefaltet ist.

3. Kleinfeuerungsanlage nach Anspruch 2,
   **dadurch gekennzeichnet,**
   **dass** die freien Faltkanten, die aufgrund der ziehharmonikaartigen Faltung des profilierten Filtermediums vorhanden sind, mit Drahtstäben stabilisiert sind.

4. Kleinfeuerungsanlage nach einem der Ansprüche 1 bis 3,
   **dadurch gekennzeichnet,**
   **dass** vor dem Feinstaubfilter mit erneuerbarem profiliertem Filtermedium ein Vorfilter vorgesehen ist und/oder
   **dass** abgeschiedene Flugasche und/oder abgeschiedene Staubpartikel in den Rauchgasstrom vor den Feinstaubfilter mit erneuerbarem profiliertem Filtermedium zurückgeführt werden.

5. Kleinfeuerungsanlage nach Anspruch 4,
   **dadurch gekennzeichnet,**
   **dass** der Vorfilter mechanisch in den Rauchgaskanal ein- und ausgebracht werden kann.

6. Kleinfeuerungsanlage nach Anspruch 4 oder 5,
   **dadurch gekennzeichnet,**
   **dass** der Vorfilter nur für den Anfahrvorgang in den Rauchgaskanal eingebracht wird.

7. Kleinfeuerungsanlage nach einem der Ansprüche 4 bis 6,
   **dadurch gekennzeichnet,**
   **dass** der Vorfilter als Rollbandfilter ausgebildet ist.

8. Kleinfeuerungsanlage nach einem der Ansprüche 1 bis 7,
   **dadurch gekennzeichnet,**
   **dass** zusätzliche Additive zur Schadstoffaufnahme und/oder Schadstoffabscheidung vor dem Feinstaubfilter mit erneuerbarem profiliertem Filtermedium ihn den Rachgaskanal eingeblasen werden.

9. Kleinfeuerungsanlage nach einem der Ansprüche 1 bis 8,
   **dadurch gekennzeichnet,**
   **dass** das Filtermedium des Feinstaubfilters mit erneuerbarem profiliertem Filtermedium und/oder des Vorfilters ausgewählt ist aus Polypropylen (PP), Polyester (PET), Polyacrylnitril (PAN), Meta-Aramid (MPD-I), Polyphenylensulfid (PPS), Polyimid (PI), Polytetrafluorethylen (PTFE), Polyvinylidenfluorid (PVDF) und Polyamid (aliphatisch, PA).

10. Kleinfeuerungsanlage nach Anspruch 9,
    **dadurch gekennzeichnet,**
    **dass** das Filtermedium des Feinstaubfilters mit erneuerbarem profiliertem Filtermedium und/oder des Vorfilters mit PTFE beschichtet ist oder aus PTFE besteht.

11. Kleinfeuerungsanlage nach einem der Ansprüche 1 bis 10,
    **dadurch gekennzeichnet,**
    **dass** die Abreinigung des Feinstaubfilters mit erneuerbarem profiliertem Filtermedium und/oder des Vorfilters mechanisch erfolgt.

12. Kleinfeuerungsanlage nach einem der Ansprüche 1 bis 11,
    **dadurch gekennzeichnet,**

**dass** die Abreinigung des Feinstaubfilters bei Temperaturen größer als 180 °C erfolgt.

13. Kleinfeuerungsanlage nach einem der Ansprüche 1 bis 12,
    **dadurch gekennzeichnet,**
    **dass** nach dem Feinstaubfilter eine Rauchgaszirkulation vorgesehen ist.

Fig. 1

a)

Filtermedium

K

2a

Verbindung

$2\alpha$

K

a

s

K

t

Transportrichtung

b)

Spannrichtung

gespannter
Zustand

gespannter
Zustand

Transportrichtung

c)

d)

e)

f)

g)

h)

i)

Abstreifer

Zahnrad-
schleuse

Zahnrad-
schleuse

Abstreifer

j)

Transportband mit Spannkeilen

Zahnrad-
schleuse

Zahnrad-
schleuse

Filtermedium

Rauchgaskanal

Transportband mit Spannkeilen

Fig. 2

a)

Ausschnitt

Dichtungsleiste
(in online-Stellung)

Strömuingsrichtung

Rauchgaskanal

Filtermedium

Dichtungs – und
Widerlagerleisten

Auflagerleiste

Reinigungsvorrichtung

b)

Ausschnitt

Filtermedium

Dichtungs – und
Widerlagerleiste

Umlenkrolle (U)

Dichtungs – und
Widerlagerleiste

Filtermedium

Umlenkrolle (U)

Transport- und
Dichtungslasche

Seitenansicht

Draufsicht

c)

Transport- und
Dichtungslaschen

Ösen

Oberkante-Filtermedium

Filtermedium

Einlage mit
Stabilisierungsdraht

d)

Rauchgaskanal

Antriebswalze (A)

Umlenkrolle (U)

Auflagerleiste

Umlenkrolle (U)

Umlenkrolle (U)

Filtermedium

Umlenkrolle (U)

Antriebswalze (A)

Umlenkwalze (U)

Reinigungswalzen (R)

Fig. 3